# EUROPEAN PATENT APPLICATION

(11) **EP 3 556 486 A1**
(43) Date of publication of application: **23.10.2019**
(21) Application number: 17881288.9
(22) Date of filing: 17.10.2017
(51) Int. Cl.: B21K 1/08, B21J 5/02, F16C 3/08

(54) **METHOD FOR MANUFACTURING FORGED CRANKSHAFT**

(30) Priority: 15.12.2016 JP 2016242832
(71) Applicant: Nippon Steel Corporation, Tokyo 100-8071 (JP)
(72) Inventor: TAMURA, Kenji, Tokyo 100-8071 (JP); OKUBO, Junichi, Tokyo 100-8071 (JP); IMANISHI, Kenji, Tokyo 100-8071 (JP); YABUNO, Kunihiro, Tokyo 100-8071 (JP); HWANG, Sam Soo, Tokyo 100-8071 (JP); TAKAMOTO, Sho, Tokyo 100-8071 (JP); ISHII, Tadanao, Tokyo 100-8071 (JP); ISHIHARA, Koichiro, Tokyo 100-0006 (JP)
(74) Representative: Zimmermann & Partner Patentanwälte mbB
(86) International application number: PCT/JP2017/037598
(87) International publication number: WO 2018/110073

(57) **Abstract**

A production method includes a forging step, a flash-trimming step, and a pressing step. In the forging step, a finish-forged product with flash is formed by an upper forging die and a lower forging die. In the forging step, an excess portion (Ac) is formed on at least one crankarm (A) which is connected to a first or third pin (P), in a portion near the first or third pin (P), on an outer periphery of a lateral part near the upper forging die, such that the excess portion protrudes from the outer periphery. In the pressing step, the excess portion (Ac) is pressed by an upper die such that the excess portion bulges toward a journal (J). This method allows production of a forged crankshaft with a reduced weight and a sufficient rigidity in a simple facility.

## Description

### TECHNICAL FIELD

The present invention relates to a method for producing a forged crankshaft. More particularly, the present invention relates to a method for producing a forged crankshaft for a three-cylinder engine or a six-cylinder engine by hot forging.

### BACKGROUND ART

Three-cylinder engines and six-cylinder engines are often mounted in small machines, such as cars, motorbikes, agricultural machines and the like. A forged crankshaft (which will hereinafter be referred to simply as a "crankshaft") used in such a three-cylinder or six-cylinder engine includes four journals, three pins, and six crankarms (which will hereinafter be referred to simply as "arms") which respectively connect the journals to the pins. A first pin, which is positioned at the front, a second pin, which is positioned in the center, and a third pin, which is positioned at the rear, are arranged around the journals with angular pitches of 120 degrees. Among the six arms, each of the four arms connected to the first pin or the third pin (the first, second, fifth and sixth arms) includes a counterweight (which will hereinafter be referred to simply as a "weight").

In recent years, weight reduction of such a crankshaft has been demanded for improvement of fuel efficiency. In order to comply with this demand, it is effective to reduce the weight of the portions of the arms around the pins. This is because the weight reduction of the arms permits weight reduction of the weights. Conventional techniques to reduce the weight of a crankshaft by reducing the weight of arms are disclosed in Japanese Patent Application Publication No. 2012-7726 (Patent Literature 1) and International Patent Application Publication No. WO 2015/075934 (Patent Literature 2).

In the technique disclosed in Patent Literature 1, each arm is formed smaller in a forging step. Further, after a flash-trimming step, a punch is pushed into the journal-side surface of the arm. Thereby, a deep hole is made in the surface of the arm. Then, the arm is reduced in weight by the volume of the hole. Meanwhile, both lateral parts of the arm in the portion around the pin are maintained thick. This ensures rigidity of the arm.

In the technique disclosed in Patent Literature 2, excess portions are formed on both lateral parts of each arm in a forging step. Further, after a flash-trimming step, the excess portions are bent toward a journal by an upper die and a lower die. Thereby, the lateral parts of the arm in the portion around the pin are made thicker, while the portion inside of the lateral parts is made thinner. Accordingly, the weight of the arm is reduced, while the rigidity of the arm is ensured.

Thus, the techniques disclosed in Patent Literatures 1 and 2 allow production of a forged crankshaft with a reduced weight and a sufficient rigidity.

### CITATION LIST

### PATENT LITERATURE

Patent Literature 1: Japanese Patent Application Publication No. 2012-7726
Patent Literature 2: International Patent Application Publication No. WO 2015/075934

### SUMMARY OF INVENTION

### TECHNICAL PROBLEM

In the technique disclosed in Patent Literature 1, however, a punch is pushed into a surface of each arm to deform the whole arm, and a great force is needed to push the punch. Accordingly, special equipment for application of a great force to the punch is necessary. Also, the durability of the punch needs attention.

In the technique disclosed in Patent Literature 2, on the other hand, it is only necessary to press the locally protruding excess portions by using an upper die and a lower die, and a great force is not needed. However, when the excess portions are bent, the excess portions first come into contact with the lower die. Accordingly, at the early stage of the excess portion bending step, all other portions of the forging workpiece than the excess portions are floated from the lower die, and the forging workpiece is unsteadily positioned. Therefore, special equipment for steady positioning of the forging workpiece is necessary.

An object of the present invention is to provide a method for producing a forged crankshaft with a reduced weight and a sufficient rigidity in a simple facility.

### SOLUTION TO PROBLEM

A production method according to an embodiment of the present invention is a method for producing a forged crankshaft including four journals, a first pin, a second pin and a third pin which are arranged around the journals with angular pitches of 120 degrees, and six crankarms respectively connecting the journals to the pins.

The method comprises:
a forging step of forming a finish-forged product with flash by using an upper forging die and a lower forging die, wherein an excess portion is formed on at least one of the crankarms which is connected to the first pin or the third pin, in a portion near the first or third pin, on an outer periphery of a lateral part near the upper forging die, such that the excess potion protrudes from the outer periphery;
a flash-trimming step of trimming flash from the finish-forged product; and
a pressing step of pressing the excess portion by using an upper die to cause the excess portion to bulge toward one of the journals adjacent thereto.

### ADVANTAGEOUS EFFECT OF INVENTION

A method according to the present invention allows production of a forged crankshaft with a reduced weight and a sufficient rigidity in a simple facility.

### BRIEF DECRIPTION OF DRAWINGS

FIG. 1 is a schematic diagram of an exemplary forged crankshaft for a three-cylinder engine.
FIGS. 2(a) to (f) are schematic diagrams showing an exemplary production process of a forged crankshaft for a three-cylinder engine.
FIG. 3 is a sectional view showing an exemplary shape of an arm with an excess portion of a finish-forged product.
FIG. 4 is a sectional view along the line IV-IV in FIG. 3.
FIG. 5 is a sectional view showing a state before a pressing step.
FIG. 6 is a sectional view along the line VI-VI in FIG. 5.
FIG. 7 is a sectional view showing a state after the pressing step.
FIG. 8 is a sectional view along the line VIII-VIII in FIG. 7.
FIG. 9 is a sectional view showing another exemplary shape of an arm with an excess portion of a finish-forged product.
FIG. 10 is a sectional view along the line X-X in FIG. 9.
FIG. 11 is a sectional view showing a state before a pressing step.
FIG. 12 is a sectional view along the line XII-XII in FIG. 11.
FIG. 13 is a sectional view showing a state after the pressing step.
FIG. 14 is a sectional view along the line XIV-XIV in FIG. 13.
FIG. 15 is a schematic diagram of an exemplary crankshaft for a six-cylinder engine.

### DETAILED DESCRIPTION OF EMBODIMENTS

A production method according to an embodiment of the present invention is a method for producing a forged crankshaft. A forged crankshaft for a three-cylinder engine includes four journals, a first, a second and a third pin which are arranged around the journals with angular pitches of 120 degrees, and six crankarms which respectively connect the journals to the pins. The production method according to the embodiment includes a forging step, a flash-trimming step, and a pressing step. In the forging step, a finish-forged product with flash is formed by an upper forging die and a lower forging die. In the forging step, an excess portion is formed on at least one of the crankarms connected to the first pin or the third pin, in the portion around the first or third pin, on the outer periphery of a lateral part near the upper forging die, such that the excess portion protrudes from the outer periphery. In the flash-trimming step, the flash is trimmed from the finish-forged product. In the pressing step, the excess portion is pressed by an upper die such that the excess portion bulges toward the adjacent journal.

In the production method according to the present embodiment, in the forging step, the excess portion is formed only in the lateral part of the arm near the upper forging die. Thereafter, in the pressing step, the excess portion is pressed by an upper die such that the excess portion will bulge toward the adjacent journal. Thereby, in the portion of the arm around the pin, only the lateral part near the upper die is thickened. The portion inside of the thickened lateral part is thin. The lateral part of the arm near the lower die is thick. Accordingly, the weight of the arm is reduced, while the rigidity of the arm is ensured. In other words, by the production method, a forged crankshaft with a reduced weight and a sufficient rigidity can be produced. In this method, no excess portion is formed in the lateral part of each arm near the lower die. Therefore, from the early stage of the pressing step, the forging workpiece can be in contact with the lower die in a large area, and the forging workpiece can be steadily positioned. This eliminates the necessity of using special equipment for steady positioning of the forging workpiece. Thus, a forged crankshaft can be produced in a simple facility.

Typically, it is all of the four arms connected to the first pin or the third pin (the first, second, fifth and sixth arms) that the excess portion is formed on in the forging step (that the excess portion is pressed to bulge toward the journals in the pressing step). In this case, the weight of the crankshaft can be reduced most. It may be at least one of the four arms connected to the first pin or the third pin that the excess portion is formed on in the forging step. For example, the excess portion may be formed only on the first arm or only on the first and sixth arms.

The excess portion is formed in the portion of the arm around the adjacent pin, on the outer periphery of the lateral part near the upper forging die. It is only necessary that the area where the excess portion is formed includes at least part of this lateral part of the arm, and there are no other limitations to the area. The excess portion may be formed, for example, to extend to the vicinity of the weight. Also, the excess portion may be formed, for example, to extend to the vicinity of the tip of the arm (what is called a pin top).

As a typical example, the pressing step is performed before the flash-trimming step.

As another typical example, the pressing step is included in the flash-trimming step. In this case, it is not necessary to perform pressing as a separate process step.

As still another typical example, the pressing step is performed after the flash-trimming step. For example, when the production method according to the present embodiment includes a coining step, the pressing step may be included in the coining step. In the coining step, the shape of a flash-trimmed forged product is correctly adjusted. When the pressing step is included in the coining step, it is not necessary to perform pressing as a separate process step.

The production method according to the present embodiment may include a preforming step to be performed before the forging step. The production method according to the present embodiment does not include a twisting step. This is because the positions of the pins (the angular pitches between the pins) of the forged product are the same as the positions of the pins of the final product.

Usually, in the forging step of the production method according to the present embodiment, in the journal-side surface of the arm on which the excess portion is formed, the die parting line between the upper forging die and the lower forging die is slanted toward the lower forging die. The thickness of the lateral part of the arm near the lower forging die is formed larger than the thickness of the lateral part of the arm near the upper forging die.

The production method according to the present embodiment is applied to production of a forged crankshaft for a three-cylinder or six-cylinder engine.

The production method according to the present embodiment will hereinafter be described in more detail in reference to the drawings. An example which will be described below is a case of producing a forged crankshaft for a three-cylinder engine by the production method according to the present embodiment.

### [General Shape of Crankshaft]

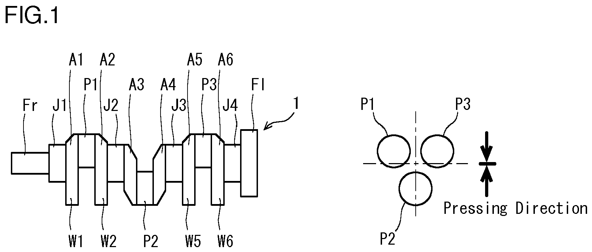

FIG. 1 is a schematic diagram of an exemplary forged crankshaft for a three-cylinder engine. The figure in the left side of FIG. 1 is a lateral view when the crankshaft which is in a supposed position for the forging step and the pressing step is viewed horizontally. The figure on the right side of FIG. 1 shows the positions of the pins when the crankshaft is viewed from the front.

In reference to FIG. 1, the crankshaft 1 includes four journals J1 to J4, three pins P1 to P3, and six arms A1 to A6 respectively connecting the journals J1 to J4 with the pins P1 to P3. The journals J1 to J4 define an axis of rotation of the crankshaft 1. The first pin P1 at the front, the second pin P2 in the center, and the third pin P3 at the rear are decentered from the journals J1 to J4, and the pins P1 to P3 are arranged around the journals J1 to J4 with angular pitches of 120 degrees.

Among the six arms A1 to A6, the four arms (the first, second, fifth and sixth arms) A1, A2, A5 and A6 connected to the first pin P1 or the third pin P3 have weights W1, W2, W5 and W6, respectively. The two arms (the third and fourth arms) A3 and A4 connected to the second pin P2 do not have weights.

In the following, when the journals J1 to J4 are collectively referred to, a reference symbol "J" is used. When the first and third pins P1 and P3 are collectively referred to, a reference symbol "P" is used. When the arms A1, A2, A5 and A6 with a weight are collectively referred to, a reference symbol "A" is used.

During the forging step and the pressing step, the second pin P2 is in a position exactly below the axis of the journals J. The first and third pins P1 and P3 are in positions at 30 degrees rotated upward from the horizontal line passing through the axis of the journals J.

Among the six arms A1 to A6, the four arms A (A1, A2, A5 and A6) connected to the first or third pin P (P1 or P3) have a shape as follows, though the shape will be described in detail later. Each of the arms has a thickened part in the portion around the adjacent pin P, in the lateral part near the upper die. The portion inside of the thickened lateral part is thin. The lateral part near the lower die is as thick as the lateral part near the upper die.

### [Production Method of Crankshaft]

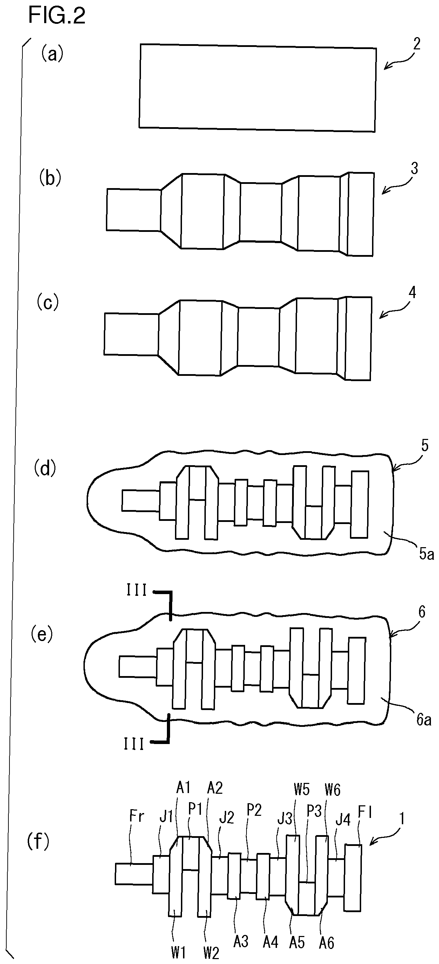

FIGS. 2(a) to (f) are schematic diagrams showing an exemplary production process of a forged crankshaft for a three-cylinder engine. FIGS. 2(a) to (f) are plan views when the crankshaft which is in a supposed position for the forging step and the pressing step is viewed vertically. The production method according to the present embodiment includes a preforming step, a forging step, a flash-trimming step, and a coining step. These steps are performed as a series of hot working. Usually, the preforming step includes a rolling step and a bending step. The forging step includes a rough forging step and a finish forging step.

The starting material of the crankshaft is a billet having a circular or square cross section, and the area of the cross section is constant over the entire length of the billet. First, as shown in FIG. 2(a), the billet is cut, and thereby, a blank 2 with a specified length is prepared. The blank 2 is heated in an induction heating furnace or a gas atmosphere heating furnace. In the rolling step, the blank 2 is rolled by a grooved roll. Thereby, the volume is distributed in the longitudinal direction, and as shown in FIG. 2(b), a rolled blank 3 is obtained. Next, the bending step is performed. In the bending step, the rolled blank 3 is partly pressed from a direction perpendicular to the longitudinal direction. Thereby, the volume is distributed also in the direction perpendicular to the longitudinal direction, and as shown in FIG. 2(c), a bent blank 4 is obtained.

Next, in the rough forging step, the bent blank 4 is press forged by a vertically arranged pair of dies. Thereby, as shown in FIG. 2(d), a rough-forged product 5 having a rough crankshaft shape (rough final shape) is obtained. Further, in the finish forging step, the rough-forged product 5 is forged by a vertically arranged pair of dies (an upper forging die and a lower forging die). Thereby, as shown in FIG. 2(e), a finish-forged product 6 having the same shape as the crankshaft to be obtained as a final product, except for some parts, is obtained.

Although a detailed description is omitted, in either the rough-forged product 5 or the finish-forged product 6, among the six arms A1 to A6, the four arms A (A1, A2, A5 and A6) connected to the first pin P1 or the third pin P3, that is, the four arms A with a weight W have an excess portion (not shown) formed thereon. Accordingly, the shapes of the arms A of the rough-forged product 5 and the finish-forged product 6 are slightly different from the shapes of those arms of the crankshaft to be obtained as a final product. The excess portions are roughly formed in the rough forging step and are completely shaped in the finish forging step.

During the rough forging step and the finish forging step, flash comes out from between the die parting surfaces which are opposed to each other. Accordingly, the rough-forged product 5 and the finish-forged product 6 have flash 5a and 6a around the formed crankshaft shape.

In the flash-trimming step, while the finish-forged product 6 with flash 6a is held by an upper die and a lower die, the flash 6a is punched out by a cutting die. Thereby, as shown in FIG. 2(f), a crankshaft 1 having the same shape as the crankshaft to be obtained as a final product, except for the above-described parts, is obtained.

In the coining step, the main parts of the flash-trimmed crankshaft 1, for example, the shaft parts, such as the journals J and the pins P1 to P3, the arms A and the weights W, are slightly pressed by dies from above and below, and the size and the shape of the crankshaft 1 are correctly adjusted to those of the final product. The shaft parts which are pressed in the coining step include a front part Fr connected to the first front journal J1, and a flange part Fl connected to the fourth rear journal J4. In the coining step, the third and the fourth arms A3 and A4 with no weights W may be pressed and adjusted. In the present embodiment, the excess portions are pressed in the coining step. In this way, the crankshaft 1 is produced as a final product.

### [Forming and Pressing of Excess Portions]

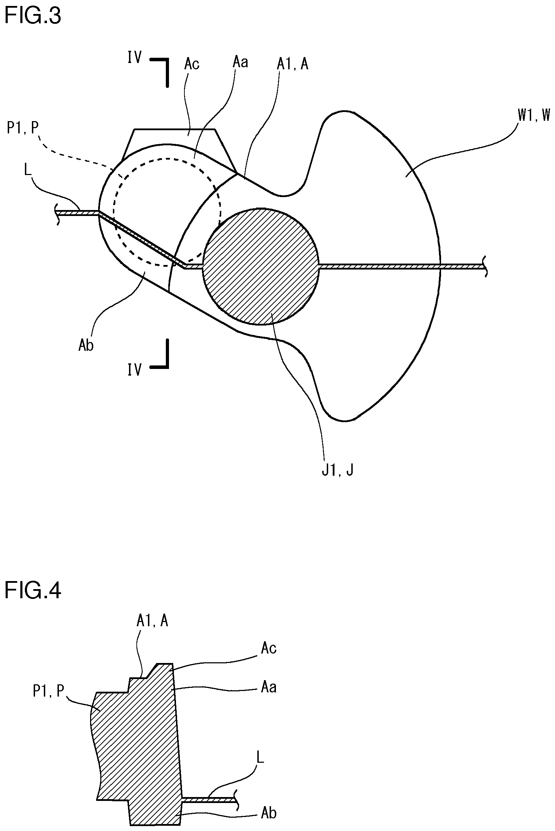

FIG. 3 is a sectional view showing an exemplary shape of an arm with an excess portion of the finish-forged product. FIG. 3 shows, as a typical example, the first arm A1 connecting the first pin P1 and the first journal J1. The sectional view in FIG. 3 shows a section along the line III-III in FIG. 2(e). FIG.4 is a sectional view along the line IV-IV in FIG. 3.

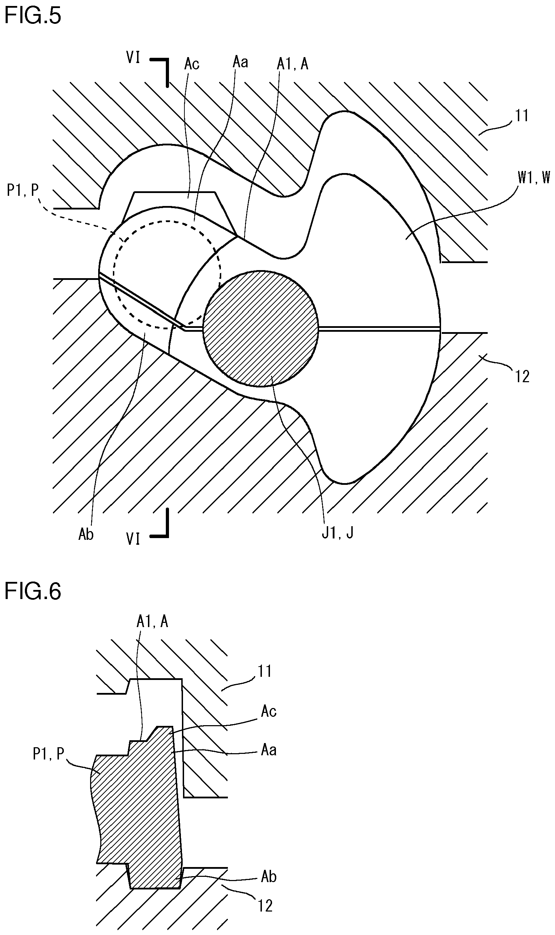

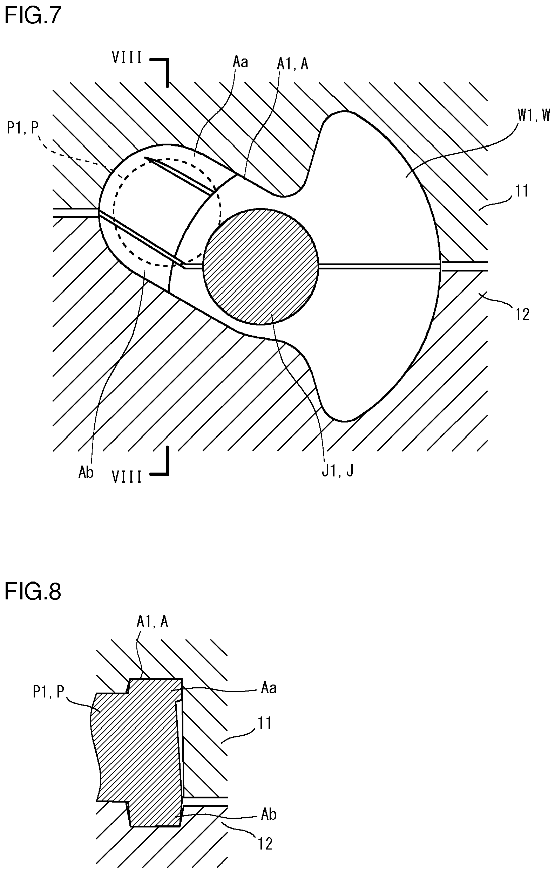

FIGS. 5 to 8 are sectional views showing the progression of the pressing step. FIGS. 5 and 6 show a state before the start of the pressing step, and FIGS. 7 and 8 show a state after the completion of the pressing step. The sections shown in FIGS. 5 and 7 correspond to the section shown in FIG. 3. The sectional view in FIG. 6 shows a section along the line VI-VI in FIG. 5. The sectional view in FIG. 8 shows a section along the line VIII-VIII in FIG. 7. Accordingly, the sections shown in FIGS. 6 and 8 correspond to the section shown in FIG. 4.

As mentioned above, the finish-forged product is produced in the forging step (finish forging step) using an upper forging die and a lower forging die. In the finish-forged product obtained by the finish forging step, the second pin P2 is located exactly below the axis of the journals J. In reference to FIG. 3, the first pin P1 is located in a position at 30 degrees rotated upward from the horizontal line passing through the axis of the journals J. The third pin P3 is located symmetrically with the first pin P1 about a line passing the center of the journal J and the center of the second pin P.

As shown in FIG. 3, on the journal-J1-side surface of the first arm A1, the die parting line L (corresponding to the position of the flash) between the upper forging die and the lower forging die is slanted toward the lower forging die. Accordingly, as shown in FIG. 4, the thickness of the lateral part Ab of the first arm A1 near the lower forging die is formed larger than the thickness of the lateral part Aa near the upper forging die. This is because there is a draft angle.

As shown in FIGS. 3 and 4, an excess portion Ac is formed in the portion of the first arm A1 around the first pin P1, on the outer periphery of the lateral part near the upper forging die. With respect to the journal axial direction, the excess portion Ac is formed on a part of the lateral part Aa of the first arm A1 near the upper forging die. In a case in which the excess portion Ac is formed on a part of the lateral part Aa, the excess portion Ac will be easily crashed or bent toward the journal when the excess portion Ac is pressed in a manner as will be described below. The excess portion Ac protrudes upward from the outer periphery of the lateral part Aa of the first arm A1 near the upper forging die. The protruding amount of the excess portion Ac is not particularly limited. However, if the protruding amount of the excess portion Ac is too large, the crankshaft will become larger in mass. Therefore, the protruding amount of the excess portion Ac is determined in consideration of the mass of the crankshaft and the rigidity of the arm A. No excess portion is formed on the outer periphery of the lateral part of the first arm A1 near the lower forging die. The upper forging die and the lower forging die have an engraved part which reflects the shape of the first arm A1. The draft angle of the engraved part is not a reverse gradient. Accordingly, there is no trouble in releasing the finish-forged product from the dies.

The finish-formed product having the shape is subjected to flash trimming in the flash-trimming step. The shape and the size of the flash-trimmed forged product are correctly adjusted by an upper die and a lower die in the coining step. In this step, also, the excess portion Ac is pressed.

As shown in FIGS. 5 to 8, in the coining step (pressing step), an upper die 11 and a lower die 12 are used. In the coining step, in the same manner as in the forging step, the forged product is pressed while the second pin P2 is kept in the position exactly below the axis of the journals J. The upper die 11 and the lower die 12 have an engraved part corresponding to the position of the forged product. For example, in the engraved part of the upper die 11, the shape corresponding to the outer periphery of the first arm A1 near the upper die is the same as the shape of that part of the final product. Similarly, in the engraved part of the lower die 12, the shape corresponding to the outer periphery of the first arm A1 near the lower die is the same as the shape of that part of the final product.

In the coining step, first, the flash-trimmed forged product is placed in the engraved part of the lower die 12. At the time, as shown in FIGS. 5 and 6, the first arm A1 is in contact with the engraved part of the lower die 12 in a large area. This is because there is no excess portion Ac on the side of the first arm A1 near the lower die 12. Therefore, the first arm A1, and accordingly the forged product is steadily positioned.

Next, the upper die 11 is moved down. Thereby, the shaft parts of the forged product are pressed. At the same time, the engraved part of the upper die 11 comes into contact with the excess portion Ac and presses down the excess portion Ac. Thereby, as shown in FIGS. 7 and 8, the excess portion Ac is crashed or bent and thus deformed, and the excess portion Ac bulges toward the first journal J1. As a result, the lateral part Aa of the first arm A1 near the upper die 11 becomes thicker. The inside portion of the lateral part Aa is not deformed and accordingly remains thin. The lateral part Ab near the lower die 12 is not deformed at the time, and for this reason, the lateral part Ab is made thick beforehand. For example, the thickness of the lateral part Ab near the lower die 12 is comparable with the thickness of the lateral part Aa near the upper die 11 after subjected to the pressing.

### [Other Embodiments]

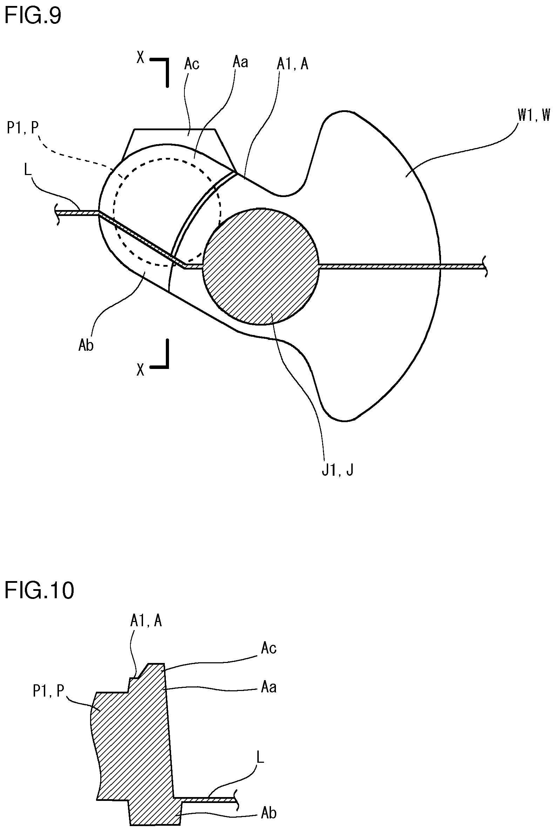

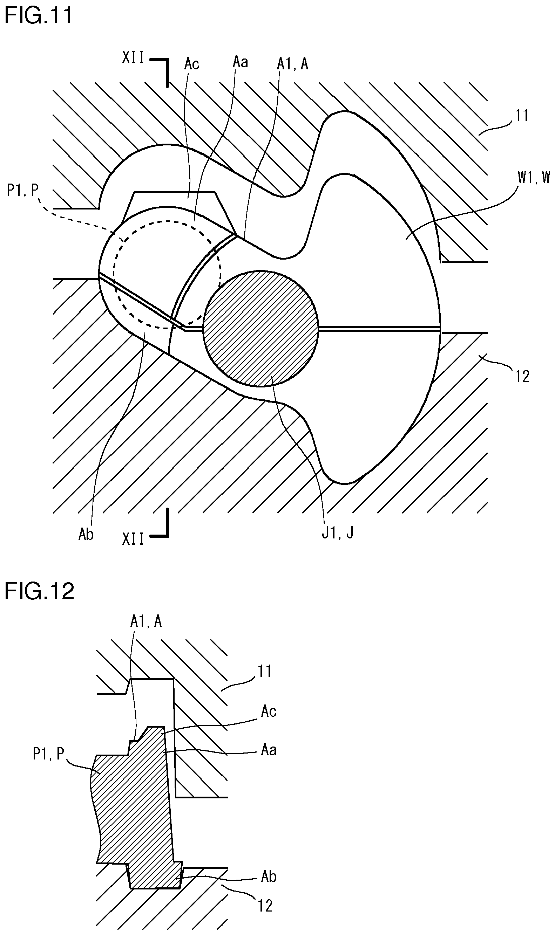

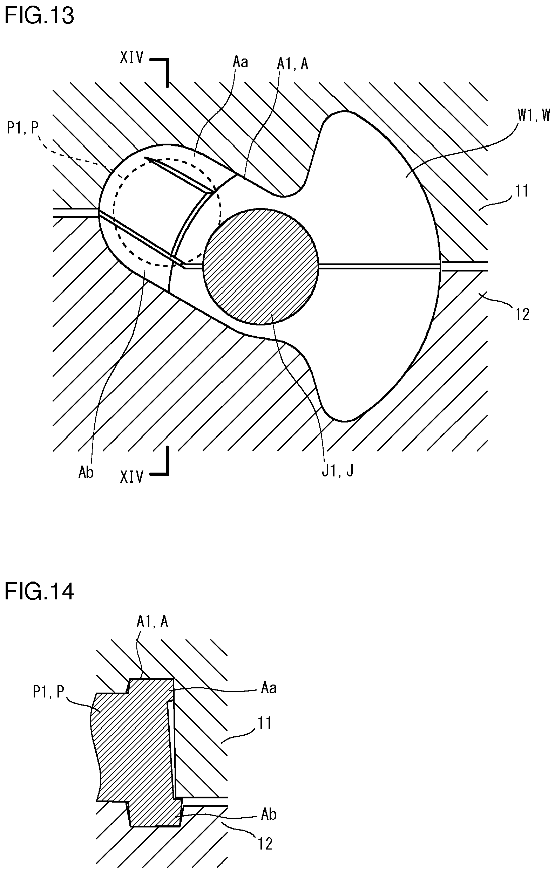

FIG. 9 is a sectional view showing another exemplary shape of an arm with an excess portion of the finish-forged product. FIG. 10 is a sectional view along the line X-X in FIG. 9. The arm shown in FIGS. 9 and 10 is a modification of the arm shown in FIGS. 3 and 4. FIGS. 11 to 14 are sectional views showing the progression of the pressing step performed on the arm shown in FIGS. 9 and 10. FIG. 11 shows a state before pressing. FIG. 12 is a sectional view along the line XII-XII in FIG. 11. FIG. 13 shows a state after pressing. FIG. 14 is a sectional view along the line XIV-XIV in FIG 13.

As shown in FIGS. 9 and 10, the arm A of the finish-forged product has a shape as follows. On the journal-J-side surface of the arm A, in the portion around the pin P, a level difference is formed with the boundary line between the different levels extending along the die parting line L. Specifically, the portion of the arm A near the upper forging die, including the lateral part Aa and the excess portion Ac, is recessed as compared with the portion of the arm A near the lower forging die, including the lateral part Ab. Accordingly, the lateral part Ab near the lower forging die is thicker. On the other hand, the portion (including the lateral part Aa) of the arm A near the upper forging die is much thinner than the lateral part Ab near the lower forging die.

The finish-forged product having this shape is subjected to flash trimming in the flash-trimming step. Thereafter, the excess portion Ac of the finish-forged product is pressed in the coining step (pressing step) shown in FIGS. 11 to 14. The coining step shown in FIGS. 11 to 14 is the same as the coining step shown in FIGS. 5 to 8. By the step, the lateral part Aa of the arm A near the upper die 11 is thickened as shown in FIG. 14. The thickness of the lateral part Ab of the arm A near the lower die 12 is is formed larger than the thickness of the lateral part Aa near the upper die 11. The portion of the arm A between the lateral part Aa and the lateral part Ab is very thin.

The present invention is not limited to the above-described embodiment, and various changes and modifications are possible without departing from the scope of the invention. For example, the preforming step may be omitted. The rough forging step may be omitted. The coining step may be omitted. When the coining step is omitted, the excess portion may be pressed in a separate step before the flash-trimming step. The excess portion may be pressed in the flash-trimming step. The excess portion may be pressed in a separate step after the flash-trimming step.

When an excess portion with a desired shape can be perfectly formed in the rough forging step, the excess portion formed in the rough forging step may be pressed in the finish forging step. In this case, alternatively, the excess portion formed in the rough forging step may be pressed not in the finish forging step but in a step after the finish forging step.

In the paragraphs above, production of a crankshaft for a three-cylinder engine has been described. However, the production method according to the present embodiment is applicable also to production of a crankshaft for a six-cylinder engine.

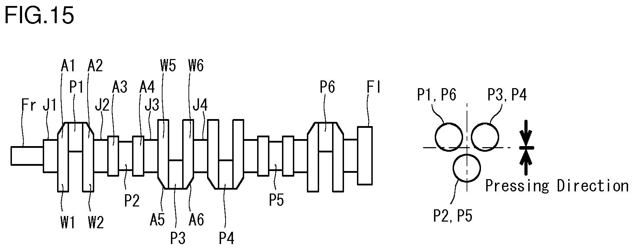

FIG. 15 is a diagram showing an exemplary crankshaft for a six-cylinder engine. FIG. 15 is a plan view when the crankshaft which is in a supposed position for the forging step and the pressing step is viewed vertically. In reference to FIG. 15, the fourth pin P4 corresponds to the third pin P3, the fifth pin P5 corresponds to the second pin P2, and the sixth pin P6 corresponds to the first pin P1. Thus, the shape of the forged crankshaft for a six-cylinder engine is composed of two forged crankshafts for a three-cylinder engine arranged in a laterally symmetric fashion with respect to the journal J4. Therefore, it is indisputable that the production method according to the embodiment is applicable also to production of such a forged crankshaft for a six-cylinder engine.

### INDUSTRIAL APPLICABILITY

The present invention is effectively applicable to production of a forged crankshaft for a three-cylinder engine or a six-cylinder engine.

### LIST OF REFERENCE SYMBOLS

1: crankshaft
J1 to J4: journal
P1 to P3: pin
A1 to A6: crankarm
W1 to W6: counterweight
Aa: lateral part near upper forging die
Ab: lateral part near lower forging die
Ac: excess portion
L: die parting line
11: upper die
12: lower die

## Claims

1. A method for producing a forged crankshaft including four journals, a first pin, a second pin and a third pin which are arranged around the journals with angular pitches of 120 degrees, and six crankarms respectively connecting the journals to the pins, the method comprising:
a forging step of forming a finish-forged product with flash by using an upper forging die and a lower forging die, wherein an excess portion is formed on at least one of the crankarms which is connected to the first pin or the third pin, in a portion around the first or third pin, on an outer periphery of a lateral part near the upper forging die, such that the excess portion protrudes from the outer periphery;
a flash-trimming step of trimming flash from the finish-forged product; and
a pressing step of pressing the excess portion by using an upper die to cause the excess portion to bulge toward one of the journals adjacent thereto.

2. The method for producing a forged crankshaft according to claim 1,
wherein the pressing step is performed before the flash-trimming step.

3. The method for producing a forged crankshaft according to claim 1,
wherein the pressing step is included in the flash-trimming step.

4. The method for producing a forged crankshaft according to claim 1,
wherein the pressing step is performed after the flash-trimming step.

5. The method for producing a forged crankshaft according to claim 4, further comprising a coining step of adjusting a shape of the flash-trimmed forged product,
wherein the pressing step is included in the coining step.

6. The method for producing a forged crankshaft according to any one of claims 1 to 5,
in the forging step, in a journal-side surface of the crankarm on which the excess portion is formed, a die parting line between the upper forging die and the lower forging die is slanted toward the lower forging die, and a thickness of a lateral part of the crankarm near the lower forging die is formed larger than a thickness of the lateral part of the crankarm near the upper forging die.

7. The method for producing a forged crankshaft according to any one of claims 1 to 6,
the forged crankshaft is for a three-cylinder engine.

8. The method for producing a forged crankshaft according to any one of claims 1 to 6,
the forged crankshaft is for a six-cylinder engine.
